# EUROPÄISCHE PATENTSCHRIFT

(11) **EP 0 406 838 B1**
(45) Veröffentlichungstag und Bekanntmachung des Hinweises auf die Patenterteilung: **21.09.1994**
(21) Anmeldenummer: 90112785.2
(22) Anmeldetag: 04.07.1990
(51) Int. Cl.: F02G 5/04, F02G 5/02, F16M 3/00

(54) **Kraft-Wärme-Kopplungsanlage**
Combined heat and power plant
Installation pour la production couplée de chaleur et d'électricité

(30) Priorität: 04.07.1989 DE 3921879
(43) Veröffentlichungstag der Anmeldung: 09.01.1991
(73) Patentinhaber: Motoren-Werke Mannheim Aktiengesellschaft, D-68140 Mannheim (DE)
(72) Erfinder: Zacharias, Friedemann, Dr.-Ing., D-6940 Weinheim (DE); Lorentz, Louis, Dipl.-Ing., D-6800 Mannheim (DE)
(74) Vertreter: Nau, Walter, Dipl.-Ing.

(56) Entgegenhaltungen:
- EP-A- 0 283 763
- FR-A- 1 089 404
- FR-A- 2 370 919
- GB-A- 1 587 696
- US-A- 2 355 208

## Beschreibung

Die Erfindung betrifft eine Kraft-Wärme-Kopplungsanlage nach dem Oberbegriff des Anspruchs 1.

Eine derartige Kraft-Wärme-Kopplungsanlage ist aus der DE-OS 37 08 238 bekannt, bei der ein Aggregatstuhl vorgesehen ist, der einen quaderförmigen Rahmen besitzt, der an allen Seiten Öffnungen sowie eine Mittelsäule aufweist, durch die ein Schalldämpfer und ein Abgaswärmeübertrager, die parallel zur Längsseite des Aggregatstuhls angeordnet sind, hindurchragen. Damit sich eine hinsichtlich Schalldämpfer und Abgaswärmeübertrager wartungsfreundliche Konstruktion ergibt, bestehen diese jeweils mindestens aus zwei separaten Bauteilen, deren Länge jeweils kürzer als der Abstand zwischen der jeweiligen Stirnseite und der Mittelsäule des Aggregatstuhls ist. Hierdurch lassen sich zwar diese Bauteile einzeln ein- und ausbauen, jedoch wird die Auslegung von Schalldämpfer und Wärmeübertrager durch die Teilung an bestimmten Stellen entsprechend der Anordnung der Mittelsäule und durch festgelegte Maximallängen beschränkt, oder aber es ist nach Aufbau und Gestaltung der Kraft-Wärme-Kopplungsanlage ein individueller Aggregatstuhl zu konstruieren, was wiederum sehr aufwendig ist. Auch ist die Zugänglichkeit nicht optimal.

Aufgabe der Erfindung ist es daher, eine Kraft-Wärme-Kopplungsanlage nach dem Oberbegriff des Anspruchs 1 zu schaffen, deren Aggregatstuhl die Auslegung der Apparate, die optimal zugänglich angeordnet werden können, nicht beeinträchtigt und sich für verschiedene Aggregate eignet.

Diese Aufgabe wird entsprechend dem kennzeichnenden Teil des Anspruchs 1 gelöst.

Dadurch, daß der Aggregatstuhl einen horizontalen Rahmen umfaßt, der auf im wesentlichen x-förmigen inneren Stützen ruht, ist die Konstruktion einfach und man kommt je nach Aggregat mit zwei bis drei Stützen aus, die die Verrohrung und die Zugänglichkeit der Apparate nicht behindern, da der Aggregatstuhl nach den Seiten offen ist. Entsprechend einfach ist die Konstruktion, die die Auslegung der Apparate (Schalldämpfer und Abgaswärmeübertrager) in Bezug auf ihre Teilung bzw. Maximallänge nicht beeinträchtigen und eine optimale Zugänglichkeit beim Ein- und Ausbau ebenso wie die Verwendbarkeit unterschiedlicher Arbeitsmaschinen ermöglicht. Die an sich großen und schweren Bauteile der Apparate können ohne "Ein- bzw. Ausfädeln" montiert und demontiert werden. Sie lassen sich zweckmäßigerweise einfach von seitlich angeordneten Abstützungen aufnehmen. Die Außenabmessungen lassen sich gegenüber dem Stand der Technik noch verringern und die Kosten des Aggregatstuhls wesentlich senken.

Die Kühl- und Heizwasserverrohrung läßt sich zusammen mit einem Kühlwasserwärmeübertrager stirnseitig anordnen und ist daher ebenfalls gut zugänglich.

Weitere Ausgestaltungen der Erfindung sind der nachfolgenden Beschreibung und den Unteransprüchen zu entnehmen.

Die Erfindung wird nachstehend anhand des schematisch in den beigefügten Abbildungen dargestellten Ausführungsbeispiels näher erläutert.

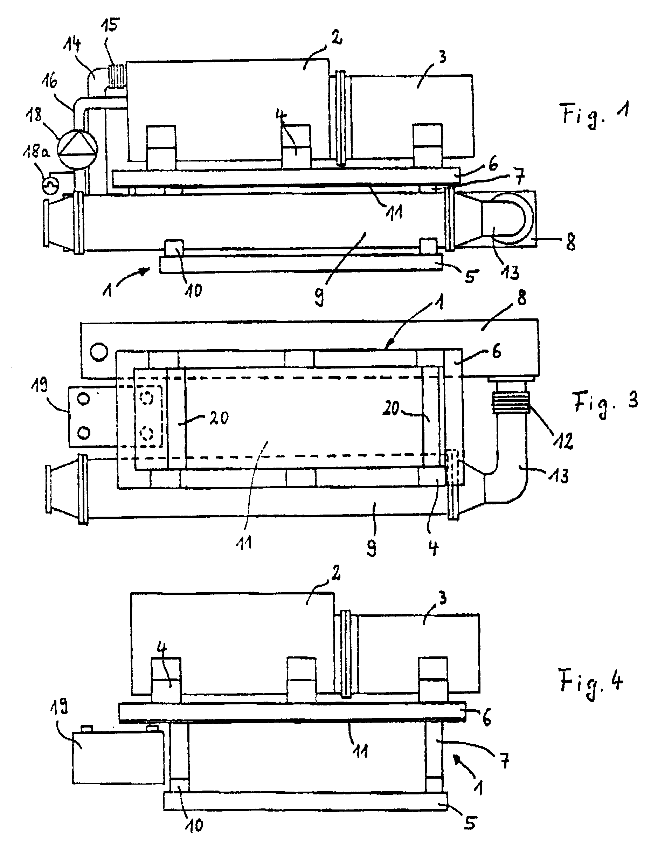

Fig. 1 zeigt in Seitenansicht eine Kraft-Wärme-Kopplungsanlage.

Fig. 2 zeigt eine Stirnansicht der Anlage von Fig. 1.

Fig. 3 zeigt eine Draufsicht auf den Aggregatstuhl der Anlage von Fig. 1.

Fig. 4 und 5 zeigen dieselben Ansichten wie Fig. 1 und 2, jedoch ohne Schalldämpfer und Abgaswärmeübertrager.

Fig. 6 zeigt die Anordnung mit Bypass im Abgassystem.

Die dargestellte Kraft-Wärme-Kopplungsanlage umfaßt einen Aggregatstuhl 1, auf dem ein Motor 2 und ein von diesem angetriebener Generator 3 über elastische Puffer 4 gelagert ist. Der Motor 2 und der Generator 3 sind zu einem Aggregat zusammengeflanscht, das auf den Aggregatstuhl 1 aufgesetzt ist.

Der Aggregatstuhl 1 besteht aus zwei parallelen, horizontalen Rahmen 5, 6, die durch gewöhnlich zwei oder drei (abhängig vom Aggregat) Stützen 7 miteinander verbunden sind, so daß die Rahmen 5, 6 im Abstand zueinander angeordnet sind. Die Stützen 7 sind quer zur Längsachse des Aggregatstuhls 1 im wesentlichen x-förmig ausgebildet und längs der Längsachse des Aggregatstuhls 1 und mit Abstand zu dessen Stirnseiten angeordnet, so daß der Aggregatstuhl 1 nach den Seiten hin offen ist. An einer Längsseite des Aggregatstuhls 1 kann ein Schalldämpfer 8 und längs der anderen Längsseite ein Abgaswärmeübertrager 9 zwischen den Rahmen 5, 6 angeordnet werden, die zweckmäßigerweise von seitlichen Abstützungen 10, die vom unteren Rahmen 5 getragen werden, aufgenommen werden. Die Stützen 7 befinden sich zwischen dem Schalldämpfer 8 und dem Abgaswärmeübertrager 9, wobei die x-Form der Stützen 7 an den runden Querschnitt der beiden Apparate 8, 9 angepaßt sein kann.

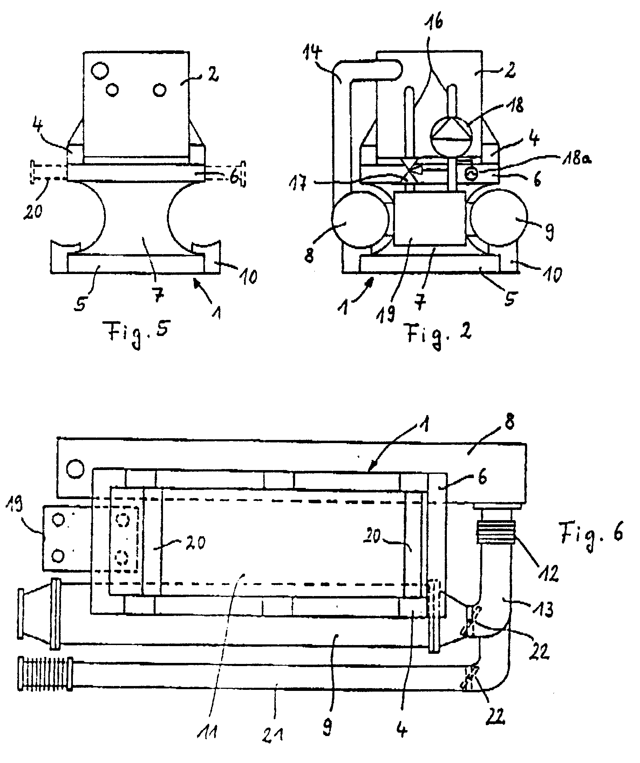

Der Schalldämpfer 8 und der Abgaswärmeübertrager 9 werden zweckmäßigerweise nur etwa zur Hälfte ihrer Tiefe bzw. ihres Durchmessers (vgl. Fig. 2) zwischen den Rahmen 5, 6 aufgenommen. Der Aggregatstuhl 1 benötigt wegen der allseitigen Zugänglichkeit des Raums unter dem Rahmen 6 nur eine relativ geringe Breite.

Der obere Rahmen 6 hat die Aufgabe, das Aggregat vor Durchbiegung zu schützen und die Abstützkräfte in die Stützen 7 zu leiten. Er kann mit einem Zwischenblech 11 unterhalb des Motors 2 und ggf. des Generators 3 versehen sein, damit kein Öl auf den Schalldämpfer 8 bzw. den Abgaswärmeübertrager 9 tropfen kann.

Die Gesamtlänge etwa des Schalldämpfers 8 und/oder des Abgaswärmeübertragers 9 kann größer als die Länge des Aggregatstuhls 1 sein. Außerdem kann der Abgaswärmeübertrager 9, der mit dem Schalldämpfer 8 über eine mit einem Rohrkompensator 12 versehene Leitung 13 verbunden ist, dem Schalldämpfer 8 vor- oder nachgeschaltet sein. Zwei- oder mehrteilige Bauarten von Schalldämpfer 8 und Abgaswärmeübertrager 9 sind ebenfalls ohne weiteres verwendbar, wobei eine zweckmäßige, nicht an bestimmte Stellen gebundene Teilung vorgenommen werden kann.

Vom Motor 2 führt eine Abgasleitung 14, die mit einem Rohrkompensator 15 versehen ist, entweder zum Schalldämpfer 8 oder zum Abgaswärmeübertrager 9. Die Gesamtzahl der Abgasrohrkompensatoren 12 und 15 beschränkt sich auf zwei, einen zur seitlichen Abfederung der Aggregatnickbewegung unmittelbar am Austritt des Motors 2 und ein weiterer zum Abfangen der Apparate-Wärmelängsdehnungen zwischen Schalldämpfer 8 und Abgaswärmeübertrager 9.

Die Kühl- und Heizwasserverrohrung 16, die einen Thermostaten 17, eine Pumpe 18 und ein Druckausgleichgefäß 18a umfassen, ist stirnseitig angeordnet und zusammen mit einem Kühlwasserwärmeübertrager 19 angeordnet. Letzterer befindet sich zwischen den beiden Rahmen 5, 6 sowie zwischen dem Schalldämpfer 8 und dem Abgaswärmeübertrager 9 und ragt mit seinen Anschlußflanschen gegenüber dem Aggregatstuhl 1 vor, so daß er ohne Rohrdemontagen abmontiert, zerlegt und gereinigt werden kann. Als Kühlwasserwärmeübertrager 19 kommt insbesondere ein Plattenwärmeübertrager infrage.

Die Anordnung und der Aggregatstuhl 1 ermöglichen es, Motorenaggregate mit unterschiedlichen Zylinderzahlen aufzunehmen. Dabei kann die gleiche Kühlwassser-Verrohrung verwendet werden. Ferner ermöglicht es der Aggregatstuhl 1, den Abgas- und Heizwasserabgang wahlweise auch auf die Generatorseite zu legen, um besonderen Gegebenheiten ohne Bauteiländerungen zu entsprechen.

Eine Abgaswärmeübertragerumgehung in Form eines Bypasses 21 ist als Zusatz ohne weiteres am Aggregat anbringbar, wobei entsprechende Schieber 22 im Bypass 21 bzw. vor dem Eintritt zum Abgaswärmeübertrager 9 vorgesehen sind, vgl. Fig. 6.

U.a. bei Verwendung eines Saugmotors 2 läßt sich am Eintritt in den Schalldämpfer 8 ein Dreiwegekatalysator leicht montier- und wartbar anordnen.

Auf den Stützen 7 können sieh Quertraversen 20 des Rahmens 6 befinden, die nach außen zum Angreifen von Tragseilen beim Transport des Aggregatstuhls 1 oder der gesamten Anlage ausziehbar sind.

## Patentansprüche

1. Kraft-Wärme-Kopplungsanlage mit einem Aggregatstuhl (1), zusammengeflanschten Arbeitsmaschinen (2, 3)), einem Schalldämpfer (8), einem Abgaswärmeübertrager (9), einem Kühlwasserwärmeübertrager (19) sowie zugehörigen Hilfsgeräten und Rohrleitungen, wobei der nach den Seiten hin Öffnungen aufweisende Aggregatstuhl (1) den Schalldämpfer (8) und den Abgaswärmeübetrager (9) entlang seiner gegenüberliegenden Längsseiten unterhalb der Arbeitsmaschinen (2, 3), die elastisch auf dem Aggregatstuhl (1) gelagert sind, berherbergt, dadurch **gekennzeichnet**, daß der Aggregatstuhl (1) nach den Seiten hin vollständig offen ist und einen horizontalen, die Arbeitsmaschinen (2, 3) tragenden Rahmen (6) aufweist, der auf mehreren, längs der Längsachse des Aggregatstuhls (1) angeordneten Stützen (7) ruht, die quer zur Längsachse des Aggregatstuhls (1) im wesentlichen x-förmig und zwischen dem Schalldämpfer (8) und dem Abgaswärmeübertrager (9) innenliegend angeordnet sind.

2. Kraft-Wärme-Kopplungsanlage nach Anspruch 1, dadurch gekennzeichnet, daß der Aggregatstuhl (1) untere seitliche Abstützungen (10) für den Schalldämpfer (8) und den Abgaswärmeübertrager (9) aufweist.

3. Kraft-Wärme-Kopplungsanlage nach Anspruch 1 oder 2, dadurch gekennzeichnet, daß der Aggregatstuhl (1) einen zum Rahmen (6) parallelen unteren Rahmen (5) aufweist, der die Stützen (7) verbindet.

4. Kraft-Wärme-Kopplungsanlage nach einem der Ansprüche 1 bis 3, dadurch gekennzeichnet, daß der Schalldämpfer (8) und der Abgaswärmeübertrager (9) gegenüber dem Aggregatstuhl (1) quer zu dessen Längsachse nach außen überstehend montiert sind.

5. Kraft-Wärme-Kopplungsanlage nach einem der Ansprüche 1 bis 4, dadurch gekennzeichnet, daß nur zwei Abgasrohrkompensatoren (12, 15) zur seitlichen Abfederung der Motornickbewegung in der vom Motor (2) wegführenden Abgasleitung (14) und zum Abfangen von Wärmelängsdehnungen zwischen Schalldämpfer (8) und Abgaswärmeübertrager (9) in der hierzwischen angeordneten Leitung (13) vorgesehen sind.

6. Kraft-Wärme-Kopplungsanlage nach einem der Ansprüche 1 bis 5, dadurch gekennzeichnet, daß die Kühl- und Heizwasserverrohrung (16) zusammen mit dem Kühlwasserwärmeübertrager (19) stirnseitig zum Aggregatstuhl (1) angeordnet ist und ohne Demontage von Rohrleitungen zerlegt und gereinigt werden kann.

7. Kraft-Wärme-Kopplungsanlage nach Anspruch 6, dadurch gekennzeichnet, daß der Kühlwasserwärmeübertrager (19) unter dem Rahmen (6) im Bereich zwischen Schalldämpfer (8) und Abgaswärmeübertrager (9) angeordnet ist.

8. Kraft-Wärme-Kopplungsanlage nach Anspruch 6 oder 7, dadurch gekennzeichnet, daß die Rohrleitungsanschlüsse des Kühlwasserwärmeübertragers (19) stirnseitig vor dem Aggregatstuhl (1) angeordnet ist.

9. Kraft-Wärme-Kopplungsanlage nach einem der Ansprüche 1 bis 8, dadurch gekennzeichnet, daß der Rahmen (6) ein Zwischenblech (11) unterhalb der Arbeitsmaschinen (2, 3) trägt.

10. Kraft-Wärme-Kopplungsanlage nach einem der Ansprüche 1 bis 9, dadurch gekennzeichnet, daß über den Stützen (7) seitlich ausziehbare Quertraversen (20) angeordnet sind.

11. Kraft-Wärme-Kopplungsanlage nach einem der Ansprüche 1 bis 10, dadurch gekennzeichnet, daß die Anordnung und Durchströmungsreihenfolge von Schalldämpfer (8) und Abgaswärmeübertrager (9) ohne Änderung der Basiskonstruktion vertauschbar sind.

12. Kraft-Wärme-Kopplungsanlage nach einem der Ansprüche 1 bis 11, dadurch gekennzeichnet, daß eine Zusatz-Bypass-Leitung (21) mit Abgasklappen (22) zur Umgehung des Abgaswärmeübertragers (9) vorgesehen ist.

13. Kraft-Wärme-Kopplungsanlage nach einem der Ansprüche 1 bis 12, dadurch gekennzeichnet, daß der Rahmen (6) generatorseitig konstruktiv in der Weise ausgeführt ist, daß ohne Änderung unterschiedliche Generatorfabrikate aufnehmbar sind.

## Claims

1. A combined heat and power plant comprising a generating set base (1), work machines (2, 3) flanged together, a sound muffler (8), a waste gas heat exchanger (9), a cooling water heat exchanger (19) and corresponding ancillary equipment and pipes, wherein the generating set base (1), with openings to the sides, accommodates the sound muffler (8) and the waste gas heat exchanger (9) along its opposing longitudinal sides beneath the work machines (2, 3) which are resiliently supported on the generating set base (1), characterised in that the generating set base (1) is completely open to the sides and is provided with a horizontal frame (6) supporting the work machines (2, 3) and resting on a plurality of supports (7) arranged along the longitudinal axis of the generating set base (1), the said supports being substantially x-shaped transversely to the longitudinal axis of the generating set base (1) and being arranged internally between the sound muffler (8) and the waste gas heat exchanger (9).

2. A combined heat and power plant according to claim 1, characterised in that the generating set base (1) is provided with lower lateral supports (10) for the sound muffler (8) and the waste gas heat exchanger (9).

3. A combined heat and power plant according to either claim 1 or 2, characterised in that the generating set base (1) is provided with a lower frame (5) extending parallel to the frame (6) and connecting the supports (7).

4. A combined heat and power plant according to any one of claims 1 to 3, characterised in that the sound muffler (8) and the waste gas heat exchanger (9) are mounted transversely to the longitudinal axis of the generating set base (1) and project outwards.

5. A combined heat and power plant according to any one of claims 1 to 4, characterised in that only two waste gas pipe compensators (12, 15) are provided for lateral cushioning of motor pitch movements in the waste gas pipe (14) leading from the motor (2) and to compensate for thermal longitudinal expansions between the sound muffler (8) and the waste gas heat exchanger (9) in the pipe (13) arranged between them.

6. A combined heat and power plant according to any one of claims 1 to 5, characterised in that the cooling and hot water pipework (16) is arranged together with the cooling water heat exchanger (19) on an end face of the generating set base (1) and can be taken apart and cleaned without dismantling the pipes.

7. A combined heat and power plant according to claim 6, characterised in that the cooling water heat exchanger (19) is arranged beneath the frame in the region between the sound muffler (8) and the waste gas heat exchanger (9).

8. A combined heat and power plant according to either claim 6 or 7, characterised in that the pipe connections of the cooling water heat exchanger (19) are arranged on the end face in front of the generating set base (1).

9. A combined heat and power plant according to any one of claims 1 to 8, characterised in that the frame supports an intermediate sheet (11) beneath the work machines (2, 3).

10. A combined heat and power plant according to any one of claims 1 to 9, characterised in that transverse crossbars (20), which may be pulled out to the sides, are arranged above the supports (7).

11. A combined heat and power plant according to any one of claims 1 to 10, characterised in that the arrangement of, and sequence of flow through, the sound muffler (8) and the waste gas heat exchanger (9) may be interchanged without changing the basic construction.

12. A combined heat and power plant according to any one of claims 1 to 11, characterised in that an additional bypass line (21) with waste gas valves or flaps (22) is provided to circumvent the waste gas heat exchanger (9).

13. A combined heat and power plant according to any one of claims 1 to 12, characterised in that the construction of that part of the frame (6) adjacent the generator is such that various generator models may be accommodated.

## Revendications

1. Installation pour la production couplée de chaleur et d'électricité, avec un bâti (1) recevant des appareils, des machines de travail (2, 3) bridées ensemble, un amortisseur de bruit (8), un échangeur de chaleur (9) pour les gaz d'échappement, un échangeur de chaleur (19) pour l'eau de refroidissement ainsi que les appareils auxiliaires et les tuyauteries correspondantes, installation dans laquelle le bâti (1) qui présente des ouvertures sur les côtés, abrite l'amortisseur de bruit (8) et l'échangeur de chaleur pour les gaz d'échappement (9) le long de ses côtés longitudinaux se faisant vis-à-vis en dessous des machines de travail (2, 3), qui sont montées de façon élastique sur le bâti (1), caractérisée en ce que le bâti (1) est complètement ouvert sur les côtés et présente un cadre horizontal (6) portant les machines de travail (2, 3), cadre qui repose sur plusieurs appuis (7) disposés le long de l'axe longitudinal du bâti (1), appuis qui sont disposés perpendiculairement à l'axe longitudinal du bâti (1) sensiblement en forme d'X et se trouvent à l'intérieur entre l'amortisseur de bruit (8) et l'échangeur de chaleur (9) pour les gaz d'échappement.

2. Installation pour la production couplée de chaleur et d'électricité, caractérisée en ce que le bâti (1) recevant des appareils présente des appuis latéraux inférieurs (10) pour l'amortisseur de bruit (8) et l'échangeur de chaleur (9) pour les gaz d'échappement.

3. Installation pour la production couplée de chaleur et d'électricité selon la revendication 1 ou 3, caractérisée en ce que le bâti (1) recevant des appareils présente un cadre (5) inférieur, parallèle au cadre (6), cadre (5) qui relie les appuis (7).

4. Installation pour la production couplée de chaleur et d'électricité selon la revendication 1 à 3, caractérisée en ce que l'amortisseur de bruit (8) et l'échangeur de chaleur pour les gaz d'échappement (9) sont montés par rapport au bâti (1) perpendiculairement à son axe longitudinal en faisant saillie vers l'extérieur.

5. Installation pour la production couplée de chaleur et d'électricité selon l'une des revendications 1 à 4, caractérisée en ce que l'on prévoit seulement deux dispositifs de compensation (12, 15) pour les tuyaux des gaz d'échappement, servant à amortir latéralement avec des ressorts le mouvement de tangage du moteur, dans la conduite d'échappement (14) partant du moteur (2) et pour neutraliser les dilatations dans le sens de la longueur entre l'amortisseur de bruit (8) et l'échangeur de chaleur pour les gaz d'échappement (9) dans la conduite (13) disposée entre eux.

6. Installation pour la production couplée de chaleur et d'électricité selon l'une des revendications 1 à 5, caractérisée en ce que l'on dispose la tuyauterie pour l'eau de refroidissement et l'eau chaude (16) du côté frontal par rapport au bâti (1) et en ce qu'on peut les désassembler et les nettoyer sans démonter les tuyauteries.

7. Installation pour la production couplée de chaleur et d'électricité, selon la revendication 6, caractérisée en ce que l'échangeur de chaleur pour l'eau de refroidissement (19) est disposé dans la zone comprise entre l'amortisseur de bruit (8) et l'échangeur de chaleur (9) pour les gaz d'échappement.

8. Installation pour la production couplée de chaleur et d'électricité selon la revendication 6 ou 7, caractérisée en ce que le raccordement des tuyaux de l'échangeur de chaleur pour l'eau de refroidissement (19) est disposé du côté frontal avant le bâti (1).

9. Installation pour la production couplée de chaleur et d'électricité selon l'une des revendications 1 à 8, caractérisée en ce que le cadre (6) porte une tôle intermédiaire (11) en dessous des machines de travail (2, 3).

10. Installation pour la production couplée de chaleur et d'électricité selon l'une des revendications 1 à 9 , caractérisée en ce que l'on dispose des traverses transversales (20) extensibles latéralement au-dessus des appuis (7).

11. Installation pour la production couplée de chaleur et d'électricité selon l'une des revendications 1 à 10, caractérisée en ce que la disposition et le montage en série dans le sens de l'écoulement de l'amortisseur de bruit (8) et de l'échangeur de chaleur pour les gaz d'échappement (9) sont interchangeables sans modification de la construction de base.

12. Installation pour la production couplée de chaleur et d'électricité selon l'une des revendications 1 à 11, caractérisée en ce que l'on prévoit une conduite additionnelle de dérivation (21) avec des volets pour les gaz d'échappement (22), servant à contourner l'échangeur de chaleur (9) pour les gaz d'échappement.

13. Installation pour la production couplée de chaleur et d'électricité selon l'une des revendications 1 à 12, caractérisée en ce que le cadre (6) est réalisé du côté du générateur d'une manière telle qu'il puisse recevoir sans modification des générateurs de fabrications différentes.
